Europäisches Patentamt

European Patent Office

Office européen des brevets

(11) Publication number: **0 496 456 B1**

## EUROPEAN PATENT SPECIFICATION

(45) Date of publication of patent specification: **15.03.95** (51) Int. Cl.⁶: **A23D 9/00**, A23C 11/04, C11C 3/08, //C11C1/04

(21) Application number: **92200115.1**

(22) Date of filing: **16.01.92**

---

(54) **Human milk fat substitutes.**

---

(30) Priority: **23.01.91 EP 91300496**

(43) Date of publication of application:
**29.07.92 Bulletin 92/31**

(45) Publication of the grant of the patent:
**15.03.95 Bulletin 95/11**

(84) Designated Contracting States:
**AT BE CH DE DK ES FR GB GR IT LI NL PT SE**

(56) References cited:
EP-A- 0 209 327          EP-A- 0 265 699
EP-A- 0 305 901          EP-A- 0 376 628
EP-A- 0 430 870          FR-A- 2 570 388

DERWENT FILE SUPPLIER WPIL, 1988, accession no. 88-273897 [39], DerwentPublications Ltd, London, GB;& JP-A-63 198 992 (AJINOMOTO K.K.) 17-08-1988

CHEMICAL ABSTRACTS, vol. 106, no. 7, February 1987, page 534, abstract no.48984h, Columbus, Ohio, US; &JP-A-61 209 544 (UEDA SEIYU K.K.) 17-09-1986

(73) Proprietor: **UNILEVER N.V.**
**Weena 455**
**NL-3013 AL Rotterdam (NL)**

(84) Designated Contracting States:
**BE CH DE DK ES FR GR IT LI NL PT SE AT**

(73) Proprietor: **UNILEVER PLC**
**Unilever House**
**Blackfriars**
**P.O. Box 68**
**London EC4P 4BO (GB)**

(84) Designated Contracting States:
**GB**

(72) Inventor: **Ouinlan, Paul Thomas, Unilever Research**
**Colworth Laboratory,**
**Colworth House**
**Sharnbrook,**
**Bedford, MK 44 1LO (GB)**
Inventor: **Chandler, Ian Christopher, Unilever Research**
**Colworth Laboratory,**
**Colworth House**
**Sharnbrook,**
**Bedford, MK 44 1LO (GB)**

---

Rank Xerox (UK) Business Services
(3.10/3.09/3.3.3)

DERWENT FILE SUPPLIER WPIL, 1987, accession no. 87-040195 [06], DerwentPublications Ltd, London, GB;& JP-A-61 296 096 (QP CQRP.) 26-12-1986

THE JQURNAL QF NUTRITIQN, vol. 119, no. 12S, 1989, pages 1810-1813, US; K.K.CARRQLL: "Upper limits of nutrients in infant formulas: polyunsaturated fatty acids and trans fatty acids"

(74) Representative: **Hartong, Richard Leroy et al Unilever N.V. Patent Division P.Q. Box 137 NL-3130 AC Vlaardingen (NL)**

## Description

This invention relates to substitute milk fat compositions, for replacing at least part of the milk fat necessary to feed young mammals and especially infants. The invention also relates to their preparation by rearrangement of fats using lipase enzymes as rearrangement catalysts, and to milk substitutes containing such fats.

Milk replacement fats should match the performance of milk fat as closely as possible in order to reproduce its physical and dietary characteristics. Human milk fat consists of a variety of triglycerides of both saturated and unsaturated fatty acids, the former being chiefly palmitic acid with a smaller amount of stearic, myristic and lauric acids and a small but significant amount of shorter-chain acids, i.e. $C_4$-$C_{10}$ acids. The unsaturated acids consist substantially of oleic with smaller quantities of linoleic and palmitoleic acid and a little linolenic acid, and longer-chain polyunsaturated acids.

Infant formulations are based on fat, carbohydrate and protein, together with added vitamins, essential minerals and other minor components. The proportions of these and the major components have been adjusted from time to time in an effort to develop a formula more nearly approximating to mothers' milk, and where special formulae were needed for premature infants or those with metabolic difficulties. For example, skim milk may be replaced by soy isolate as the protein source for infants with cows' milk sensitivity and lactose as the carbohydrate may be replaced by other sugars and starches. For the fat component, both animal and vegetable fats have been used.

Fat compositions containing similar amounts of the principal fatty acids of milk fat may be derived from oils and fats of vegetable origin. With the notable exception of so-called lauric fats such as coconut and palm kernel oils, most vegetable oils and fats consist substantially of $C_{16}$ and $C_{18}$ fatty acids, although shorter-chain fatty acids, e.g. $C_4$, characteristic of bovine milk fat are notably absent. The non-lauric vegetable fats and oils also tend to be more highly unsaturated than milk fat - at any rate that of land-based mammals. Nevertheless, fats may be derived with generally similar fatty acid composition to milk fat.

A significant difference nevertheless remains which is believed to have important dietary consequences; most glycerides of vegetable origin are overwhelmingly unsaturated in the 2-position, chiefly oleic and linoleic acids. In contrast, substantial amounts of palmitic acid occupy the 2-position of glycerides in human milk fat, more than half the total fatty acid there being palmitic acid, and the preponderance of total palmitic acid in the fat being located in this position, a major glyceride of human milk fat being 1,3-di-unsaturated-2-saturated glyceride. Randomisation of vegetable-based fats containing palmitic acid residues leave insufficient in the 2-position of the product to provide a good match, without placing excessive amounts of palmitic acid in the other positions, thereby including unwanted glycerides in the composition. Fractional crystallisation to remove glycerides containing palmitic acid in the 1,3-positions is tedious, expensive and usually unsuccessful.

The distribution of fatty acids and the triglycerides of some milk fats of nutritional importance was studied by Freeman, Jack and Smith (J. Dairy Sci., 1965, p. 853), who reported that in human milk fat a greater proportion of palmitic acid appears in the 2-position and of stearic acid and oleic acid in the 1,3-positions than in the milk fat of ruminants. The greater absorptions of palmitic acid in the 2-position of triglycerides by infants was reported by Filer, Mattson and Fomen (J. Nutrition, 99, pp. 293-298), who suggest that the relatively poor absorption of butter fat by infants compared with human milk fat is attributable to its substantially uniform distribution of palmitic acid between the glyceride positions of the fat. The above-mentioned experiments show that about 95% unrandomised lard could be absorbed by infants compared with about 70% for randomised lard, in which less palmitic acid appears in the 2-position. The conclusion that fatty acid is better absorbed in the 2-position is believed to hold good for all long-chain (i.e. $\geq C_{1-6}$) saturated fatty acids, but palmitic acid is of particular importance for infants and stearic acid to a lesser extent.

From EP 209 327 it is known that human milk fat replacement fats consist of a mixture of triglycerides in which at least half of the fatty acid residues in the 2-positions are saturated, preferably as palmitic acid residue, while more than 40 wt.% of the total amount of saturated fatty acids present in the triglycerides are bonded at the 2-position and the fatty acid residues in the 1-, and 3-positions are randomly distributed between these positions and include unsaturated fatty acid residues.

According to this EP patent, the unsaturated fatty acid residues are chosen from the group consisting of oleic acid, linoleic acid and palmitoleic acid residues.

However, according to K.K.Carroll, J. Nutr. 119 (1989), pp. 1810-1813, it is recommended that part of the unsaturated fatty acids, in particular of those in the 1,3-positions, should consist of linolenic acid. Carroll further states that it is preferred that the amount of linolenic acid should not be more than 3% of the total fat.

R.G.Jensen, in Textbook of Gastroenterology and Nutrition in Infancy, 2nd Edition, edited by Lebenthall, Raven Press Ltd, NY (1989), discloses that human milk fat is enriched in the 1,3-positions with 18:3 w3 ( = linolenic acid). Thus, a human milk replacement fat should also preferably contain 18:3 w 3 enriched in the 1,3-positions of the triglyceride.

Although rapeseed has a total 18:3 w3 content of about 10%, about 67% of this is present in the 2-position; therefore, less than 33% of the 18:3 w3 is bonded at the 1.3-positions.

Soybean oil shows a structure in which a total of 8% linolenic acid is present, which is nearly randomly distributed between Sn 1,3 and Sn-2 positions of the triglycerides. However, in soybean oil, the triglycerides are predominantly present as UUU and SUU, while in human milk fat, the triglycerides are more likely to be the USU-type.

Therefore, rapeseed and soybean oil are not ideal sources of human milk fat replacement fats in that they do not provide a source of 18:3 w 3 in which the positional distribution and triglyceride configuration are similar to those found in human milk fat. We have now developed a fat that can be obtained by an enzymatic route. It has a composition that is closer to natural human milk fat than any replacement fats known so far.

The present invention provides a novel fat composition suitable for replacing at least part of the fat in infant food formulations comprising a mixture of triglycerides wherein at least 40 wt% of the total amount of saturated fatty acid residues, consisting substantially of palmitic acid, present in the triglycerides are bonded at the 2-position and that the fatty acid residues in the 1-, and 3-positions are randomly or non-randomly distributed between these positions and include oleic, linoleic and linolenic acid and other unsaturated fatty acid residues, and whereby the triglycerides contain 0.2-7 wt% of linolenic acid from which more than 70 wt% is bonded at the 1,3-positions. All the fatty acids, or virtually all, should be unbranched and even- numbered.

The 1-, 3-positions of the novel compositions according to the invention include oleic acid, linoleic acid and linolenic acid. These should preferably consist largely of oleic acid with linoleic acid and palmitoleic and some linolenic. Preferably, also the compositions include at least as much saturated fatty acid in the 2-position as in the 1-, and 3-positions combined, more preferably up to twice as much. Preferably, also the 1,3-positions include both unsaturated $C_{18}$ and saturated $C_4$ to $C_{14}$ fatty acids. The proportion and variety of these fatty acids may be determined in accordance with dietary and physical requirements of the composition required. It is, however, preferred that the triglycerides contain linolenic acid in an amount of 0.2-7 wt.%, mainly bonded at the 1,3-position and wherein more than 80% of the total amount of linolenic acid is bonded at the 1.3-positions. Milk replacement fats should be capable of emulsification at blood heat in liquid feed and should therefore preferably be melted at this temperature. The melting point of fats is determined by their fatty acid composition which may be selected accordingly.

Therefore, our invention also includes substitute milk fat compositions, comprising the fat composition as described above in a blend including other fats such as vegetable oil. Suitable fats are fats comprising 0-40 wt.% of medium-chain triglyceride; 0-30 wt.% preferably 10-20 wt.% of lauric fats (coconut, palmkernel), 0-50 wt.% of other vegetable fats (high-oleic sunflower, sunflower, canola, soybean, palm oil etc.) preferably 10-30 wt.% of vegetable oil and 0-40 wt.% of butterfat or fractions of these fats. The lauric fat is preferably palmkernel oil, whereas the vegetable oils are preferably sunflower oil or soybean oil. In this way, the compositions of the invention provide blends matching the composition of milk fat or its melting characteristics. The best compositions are obtained when the Solids Content Index is within the following ranges: $N_0$ = 35-55; $N_{10}$ = 25-50; $N_{20}$ = 10-25 and $N_{30} \leq 10$.

Novel compositions according to the invention may be obtained by rearrangement of fatty mixtures comprising glycerides consisting substantially of more saturated 2-palmityl glycerides, under the influence as rearrangement catalyst of an enzyme lipase which is regiospecific in activity in the 1- and 3-positions only of glycerides. Processes of this kind are described in our British patent specification 1 577 933. Under the influence of the catalyst, unsaturated fatty acid residues may be introduced into the 1- and 3-positions of the 2-palmityl glycerides by exchange with unsaturated free fatty acids or their alkyl esters which are obtained by hydrolysis of rapeseed oil or soybean oil. Those fatty acid mixtures at least comprise linolenic acid. Shorter-chain saturated acids may alternatively be introduced. The 2-palmityl glycerides modified in this way may then be separated from the product. A mixture of acidolysis reagents may be used to provide a mixture of glycerides in the product conforming substantially to that of milk fat. The reaction is preferably carried out at a temperature from 10 to 90 °C and may be conducted batchwise or in continuous fashion, with or without a water-immiscible organic solvent.

A suitable source of 2-palmityl glyceride for use in this process may be obtained as a top fraction of palm oil, which contains up to 92% trisaturated acid glycerides including tripalmitin. Generally, a top fraction contains 4 parts of tripalmitin and 1 part of symmetrical disaturated triglycerides.

The novel compositions of the invention comprise substantially symmetrical 2-saturated $C_{16}/C_{18}$ glyceridemixtures, the 1- and 3-positions containing the same fatty acid residue composition or comprising more than one fatty acid.

The present invention also provides infant food compositions comprising fat, protein and carbohydrate components in the approximate relative weight proportions of 0.5-2 parts of protein : 3-7 parts of carbohydrates : 2-3 parts of fat, wherein at least part of the fat normally used in such formulations is replaced by an enzyme-rearranged fat in accordance with the present invention. Dry formulations containing this component mixture, together with additional components customary in such formulations, should be dispersed for use in sufficient water to produce an emulsion of approximately $3\frac{1}{2}$ grams of fat per 100 ml of dispersion.

EXAMPLE.

A 1:1 wt:wt ratio of triglyceride (with a high content (>90%) of palmitic acid at the 2-position)) and canola fatty acids was interesterified by passing through a packed bed column containing immobilised SP-392 lipase enzyme (NOVO). The water activity of the system was controlled by means of a wetted silica packed column through which a proportion (20%) of the feed flow was passed. The reaction temperature was 70°C; no solvent was used. An overall conversion of 93% was achieved during the reaction of the triglyceride with the acids. A total of 5.5% diglycerides was produced during the course of the reaction.

The fatty acids were removed from the crude product by steam distillation, followed by chemical neutralisation to remove all traces of free fatty acid. Diglycerides were removed by passing the product, dissolved in hexane, through a packed bed of silica.

The triglyceride was finally fractionated at -5°C with an acetone : oil ratio of 6:1. The olein was recovered and refined. The fatty acid composition and 2-position analysis of the resultant oil are shown in the Table. Greater than 90% of the 18:3 w3 present in this oil is esterified in the 1,3-position.

## TABLE

| | REACTANTS | | | | PRODUCT | |
| --- | --- | --- | --- | --- | --- | --- |
| | FEED OIL | | CANOLA ACIDS | CRUDE PRODUCT | OLEIN | |
| | FAME | 2-POSN. | FAME | FAME | FAME | 2-POSN. |
| 14:0 | 0.8 | 1.2 | – | 0.5 | 0.5 | 1 |
| 16:0 | 67.5 | 91.8 | 6.1 | 48 | 32.0 | 71 |
| 18:0 | 6.4 | 3.4 | 2.1 | 4.1 | 1.8 | 6.4 |
| 18:1 | 22.1 | 2.8 | 58.8 | 32.3 | 45 | 17 |
| 18:2w6 | 2.3 | 0.3 | 24.9 | 11 | 15.4 | 3.5 |
| 18:3w3 | – | 0.2 | 7.1 | 2.8 | 3.9 | 0.7 |
| $C_{20}$ | 0.4 | – | – | | – | – |
| $C_{22}$ | 0.4 | – | | | – | – |

## Claims

1. Fat composition comprising a mixture of triglycerides, characterised in that at least 40 wt.% of the total amount of saturated fatty acid residues, consisting substantially of palmitic acid, present in the triglycerides are bonded at the 2-position and that the fatty acid residues in the 1-, and 3-positions are randomly or non-randomly distributed between these positions and include oleic, linoleic and linolenic acid and other unsaturated fatty acid residues, whereby the triglycerides contain 0.2-7 wt% of linolenic acid from which more than 70% is bonded at the 1,3-positions.

2. Fat composition according to Claim 1, wherein the 1,3-position fatty acids include oleic acid, linoleic acid and linolenic acid and saturated $C_4$ to $C_{12}$ fatty acids.

3. Fat composition according to Claims 1-2, wherein more than 80% of the total amount of linolenic acid present in the composition is bonded at the 1,3-positions of the triglycerides.

4. Substitute milk fat composition comprising a fat composition as claimed in any of the preceding Claims in a blend with at least one triglyceride, selected from medium chain triglycerides, lauric fats, other vegetable fats and butterfat or fractions thereof in amounts of 0-40 wt.% of medium-chain triglycerides, 0-30 wt.% of lauric fats, 0-50 wt.% of other vegetable fats and 0-40 wt.% of butterfat or fractions of these fats.

5. Composition as claimed in Claim 4, comprising 10 to 20% lauric fat.

6. Composition as claimed in Claim 4, comprising 10 to 30% of said vegetable oil.

7. Composition as claimed in Claim 6, wherein the vegetable oil is sunflower oil or soybean oil.

8. Composition according to Claim 4, wherein the Solids Content Index of the blend is within the ranges of 35 to 55 at 0°C, 25 to 50 at 10°C, 10 to 25 at 20°C and not more than 10 at 30°C.

9. Infant food composition comprising 0.5-2 parts of protein, 3-7 parts of carbohydrate and 2-3 parts of fat, wherein at least part of the fat composition comprises a composition as claimed in any of the preceding Claims 1-8.

10. Process for the preparation of a fat composition according to Claim 1, comprising rearranging a mixture of glycerides including substantial amounts of 2-palmityl glycerides, in the presence of a fatty acid composition, obtained by hydrolysing rapeseed or soybean oil, and an activated lipase as rearrangement catalyst which is predominantly or exclusively 1,3-regio-specific.

11. Process according to Claim 10, wherein the glyceride mixture comprises a palm fat.

12. Process according to Claim 10, wherein the fatty acid mixture comprises at least linolenic acid.

13. Process according to any of the preceding Claims 10-12, wherein the rearranged fat is fractionated to recover an unsaturated mixture of 2-palmityl glycerides.

**Patentansprüche**

1. Fettzusammensetzung, umfassend eine Mischung von Triglyceriden, dadurch gekennzeichnet, daß mindestens 40 Gew.-% der Gesamtmenge der in den Triglyceriden vorliegenden im wesentlichen aus Palmitinsäure bestehenden, gesättigten Fettsäurereste an die 2-Stellung gebunden sind und daß die Fettsäurereste in den 1- und 3-Stellungen willkürlich oder nicht willkürlich zwischen diesen Stellungen verteilt sind und Öl-, Linol-, Linolensäure und andere ungesättigte Fettsäurereste einschließen, wodurch die Triglyceride 0,2 bis 7 Gew.-% Linolensäure enthalten, von denen mehr als 70 % an die 1,3-Stellungen gebunden sind.

2. Fettzusammensetzung nach Anspruch 1, in welcher die Fettsäuren in der 1,3-Stellung Ölsäure, Linolsäure, Linolensäure und gesättigte $C_4$ - bis $C_{12}$-Fettsäuren einschließen.

3. Fettzusammensetzung nach Anspruch 1 bis 2, in welcher mehr als 80 % der in der Zusammensetzung vorliegenden Gesamtmenge an Linolensäure an die 1,3-Stellungen der Triglyceride gebunden sind.

4. Milchfettersatz-Zusammensetzung, umfassend eine Fettzusammensetzung nach irgendeinem der vorhergehenden Ansprüche in einem Gemisch mit mindestens einem Triglycerid, ausgewählt aus Triglyceriden mittlerer Kettenlänge, Laurinfetten, anderen Pflanzlichen Fetten und Butterfett oder Fraktionen davon, in Mengen von 0 bis 40 Gew.-% der Triglyceride mittlerer Kettenlänge, 0 bis 30 Gew.-% Laurinfetten, 0 bis 50 Gew.-% anderer pflanzlicher Fette und 0 bis 40 Gew.-% Butterfett oder Fraktionen dieser Fette.

5. Zusammensetzung nach Anspruch 4, umfassend 10 bis 20 % Laurinfett.

6. Zusammensetzung nach Anspruch 4, umfassend 10 bis 30 % pflanzliches Öl.

7. Zusammensetzung nach Anspruch 6, worin das pflanzliche Öl Sonnenblumen- oder Sojaöl ist.

8. Zusammensetzung nach Anspruch 4, worin der Feststoffgehaltsindex des Gemisches in den Bereichen von 35 bis 55 bei 0°C, 25 bis 50 bei 10°C, 10 bis 25 bei 20°C und nicht mehr als 10 bei 30°C liegt.

9. Babynahrungszusammensetzung, umfassend 0,5 bis 2 Teile Protein, 3 bis 7 Teile Kohlenhydrat und 2 bis 3 Teile Fett, in welcher mindestens ein Teil der Fettzusammensetzung eine Zusammensetzung nach irgendeinem der vorhergehenden Ansprüche 1 bis 8 umfaßt.

10. Verfahren zur Herstellung einer Fettzusammensetzung nach Anspruch 1, umfassend die Umlagerung einer Mischung von Glyceriden, einschließlich wesentlicher Mengen an 2-Palmitylglyceriden, in Gegenwart einer Fettsäurezusammensetzung, erhalten durch Hydrolysieren von Raps- oder Sojaöl, und einer aktivierten Lipase als Umlagerungskatalysator, der vorherrschend oder ausschließlich 1,3-regiospezifisch ist.

11. Verfahren nach Anspruch 10, bei welchem die Glyceridmischung ein Palmfett umfaßt.

12. Verfahren nach Anspruch 10, bei welchem die Fettsäuremischung mindestens Linolensäure umfaßt.

13. Verfahren nach irgendeinem der vorhergehenden Ansprüche 10 bis 12, bei welchem das umgelagerte Fett zur Gewinnung einer ungesättigten Mischung von 2-Palmitylglyceriden fraktioniert wird.

**Revendications**

1. Composition de graisse comprenant un mélange de triglycérides, caractérisée en ce qu'au moins 40% en poids du total des restes d'acides gras saturés consistant sensiblement en acide palmitique, présent dans les triglycérides, sont liés en position 2 et en ce que les restes d'acides gras dans les positions 1 et 3 sont distribués sur un mode statistique ou non statistique entre ces positions et comprennent de l'acide oléique, linoléique et linolénique et d'autres restes d'acides gras insaturés, de sorte que les triglycérides contiennent de 0,2 à 7% en poids d'acide linoléique dont plus de 70% sont liés en positions 1,3.

2. Composition de graisse selon la revendication 1, dans laquelle les acides gras en positions 1,3 comprennent l'acide oléique, l'acide linoléique et l'acide linolénique ainsi que les acides gras saturés en $C_{4-12}$.

3. Composition de graisse selon les revendications 1 et 2, dans laquelle plus de 80% du total de l'acide linolénique présent dans la composition sont liés en positions 1,3 des triglycérides.

4. Composition de graisse substitut de lait comprenant une composition de graisse selon l'une quelconque des revendications précédentes en mélange avec au moins un triglycéride choisi parmi les triglycérides à chaîne moyenne, les graisses lauriques, d'autres graisses végétales et la graisse de beurre ou des fractions de celles-ci en une proportion de 0 à 40% en poids de triglycérides à chaîne moyenne, 0 à 30% de graisses lauriques, 0 à 50% en poids d'autres graisses végétales et 0 à 40% en poids de graisse de beurre ou de fractions de ces graisses.

5. Composition selon la revendication 4, qui comprend de 10 à 20% de graisse laurique.

**6.** Composition selon la revendication 4, qui comprend de 10 à 30% de ladite huile végétale.

**7.** Composition selon la revendication 6, dans laquelle l'huile végétale est l'huile de tournesol ou l'huile de soja.

**8.** Composition selon la revendication 4, dans laquelle l'Indice des Teneurs en Solides du mélange est dans les limites de 35 à 55 à 0°C, 25 à 50 à 10°C, 10 à 25 à 20°C et pas plus de 10 à 30°C.

**9.** Composition alimentaire pour nourrissons, qui comprend de 0,5 à 2 parties de protéines, de 3 à 7 parties d'hydrates de carbone et 2 à 3 parties de graisse, au moins une partie de la composition de graisse comprenant une composition selon l'une quelconque des revendications précédentes 1 à 8.

**10.** Procédé de préparation d'une composition de graisse selon la revendication 1, qui consiste à regrouper un mélange de glycérides comportant des quantités importantes de glycérides 2-palmityliques, en présence d'une composition d'acides gras qu'on obtient en hydrolysant l'huile de colza ou l'huile de soja, et une lipase activée à titre de catalyseur de regroupement qui est de façon prédominante ou exclusive 1,3-régiospécifique.

**11.** Procédé selon la revendication 10, dans lequel le mélange de glycérides comprend une graisse de palme.

**12.** Procédé selon la revendication 10, dans lequel le mélange d'acides gras comprend au moins de l'acide linolénique.

**13.** Procédé selon l'une quelconque des revendications 10 à 12, dans lequel la graisse regroupée est fractionnée pour récupérer un mélange insaturé de glycérides 2-palmityliques.